# EUROPÄISCHE PATENTANMELDUNG

(11) **EP 1 403 800 A2**
(43) Veröffentlichungstag der Anmeldung: **31.03.2004**
(21) Anmeldenummer: 03020883.9
(22) Anmeldetag: 15.09.2003
(51) Int. Cl.: G06F 17/60

(54) **Verfahren zur automatischen Projektierung einer neuen Meldung auf einer Benutzeroberfläche einer Computer-Anwenderstadion**

(30) Priorität: 26.09.2002 DE 10244897
(71) Anmelder: SIEMENS AKTIENGESELLSCHAFT, 80333 München (DE)
(72) Erfinder: Langguth, Karlheinz, 91054 Erlangen (DE)

(57) **Zusammenfassung**

Die Erfindung betrifft ein Verfahren zur automatischen Projektierung einer neuen Meldung auf der Benutzeroberfläche einer Computer-Anwenderstation, wobei die neue Meldung zur Mitteilung einer Dateninformation einer technischen Prozessanlage dient und wobei eine bereits projektierte Meldung auf der Benutzeroberfläche als Tabelle mit Spalten sowie Zeilen angezeigt wird und die Felder der Tabelle Dateninformationen aufweisen und wobei eine neue Zeile der Tabelle nach einem Eingabesignal des Benutzers automatisch angezeigt wird unter automatischer Belegung der Felder der neuen Zeile mit Dateninformationen, wobei mindestens eine Dateninformation identisch von der bisher projektierten Meldung übernommen und mindestens eine Dateninformation der bisher projektierten Meldung nach einem Fortschreibungsalgorithmus bearbeitet und geändert übernommen wird.

## Beschreibung

Die Erfindung betrifft ein Verfahren zur automatischen Projektierung einer neuen Meldung auf der Benutzeroberfläche einer Computer-Anwenderstation mit den Merkmalen des Oberbegriffs des Patentanspruchs 1.

Der Erfindung liegt die Aufgabe zugrunde, ein besonders benutzerfreundliches Verfahren zur automatischen Projektierung einer Meldung auf der Benutzeroberfläche einer Computer-Anwenderstation zur Überwachung und Steuerung einer technischen Prozessanlage anzubieten.

Diese Aufgabe wird durch ein Verfahren mit den Merkmalen des kennzeichnenden Teils des Patentanspruchs 1 in Verbindung mit den Merkmalen des Oberbegriffs gelöst. Vorteilhafte Verfahrensvarianten werden in den Unteransprüchen 2 - 8 beschrieben.

Das erfindungsgemäße Verfahren zur automatischen Projektierung einer Meldung in Tabellenansicht auf der Benutzeroberfläche einer Computer-Anwenderstation ermöglicht das benutzerfreundliche Projektieren neuer Meldungen zur Überwachung und Steuerung einer technischen Prozessanlage (z.B. einer Fertigungsanlage, eines Kraftwerks, einer chemischen Anlage etc.).

Bei einer derartigen Prozessanlage ist es notwendig, bestimmte Meldungen zur Mitteilung einer (geänderten) Dateninformation der Prozessanlage bei Übertragung bestimmter Daten (Zustand- oder Prozessdaten) von der Prozessanlage an die Computer-Anwenderstation auf der Benutzeroberfläche der Computer-Anwenderstation zu projektieren. Hierbei kann es sich z.B. um Alarmmeldungen handeln, z.B. wenn bei der Prozessanlage ein bestimmter Grenzwert (z.B. Druckwert, Temperaturwert, Geschwindigkeitswert etc.) über- oder unterschritten wurde. Falls eine bestimmte Dateninformation bei Übertragung von der Prozessanlage an die Computer-Anwenderstation eine Meldung auslösen soll, ist diese Meldung zuvor vom Benutzer zu projektieren, d.h. anzulegen.

Ausgehend von einer bereits projektierten Meldung in Tabellenansicht wird durch das erfindungsgemäße Verfahren das Projektieren neuer Meldungen erleichtert. Beim Projektieren einer neuen Meldung ausgehend von einer bereits vorliegenden projektierten Meldung kann der Benutzer durch einen Eingabebefehl (z.B. über die Tastatur oder eine Hilfseinrichtung (z.B. wie ein Mauselement oder Scroll-Element) nach dem erfindungsgemäßen Verfahren eine neue Meldung besonders benutzerfreundlich anlegen.

Nach Absetzen eines Eingabebefehls zur Auslösung des erfindungsgemäßen Verfahrens wird automatisch eine neue Zeile der Tabelle einer bereits projektierten Meldung auf der Benutzeroberfläche erzeugt und es werden Dateninformationen der bisherigen Meldung identisch oder abgeändert übernommen.

Bislang war es erforderlich, durch mehrfache Kopier- und Einfügevorgänge neue Tabellenzeilen zu erzeugen und die einzelnen Dateninformationen manuell in die jeweiligen neuen Felder der Tabelle einzufügen. Beim erfindungsgemäßen Verfahren geschieht dies automatisch, so dass der Benutzer zeitsparend neue Meldungen anlegen kann.

Ausgehend von einer bisherigen Meldung wird mindestens eine Dateninformation einer Tabellenzeile der bisherigen Meldung unverändert übernommen. Dies geschieht automatisch. Der Benutzer muss nicht wie bislang kopieren und einfügen.

Ferner kann ausgehend von einer bisherigen Dateninformation durch Anwendung eines Fortschreibungsalgorithmus eine neue Dateninformation erzeugt werden. Dies kann in einer numerischen Fortschreibung erfolgen. So kann z.B. bei einer vorliegenden Dateninformation in Form einer Zahl (z.B. "zwei") die neue Dateninformation eine andere Zahl sein, die um eine Stufe erhöht oder erniedrigt ist ("drei" bzw. "eins").)

Derartige Fortschreibungsalgorithmen können logisch begründet sein, da z.B. die Anfangsnummerierung einer Anfangstabellenzeile nach einem auf- oder absteigendem Zahlenmuster erfolgen kann.

Gemäß einer weiteren Variante kann ausgehend von einer Dateninformation der bisher projektierten Meldung mit einer Ausprägung "A" und einer zweiten möglichen Ausprägung "B" (digitale Dateninformation, z.B. "Ein" und "Aus") durch Anwendung eines Fortschreibungsalgorithmus die Ausprägung "B" als neue Dateninformation der neu projektierten Meldung ausgegeben werden.

Das erfindungsgemäße Verfahren ist anhand von Ausführungsbeispielen in den Zeichnungsfiguren weiter erläutert. Es zeigen:
- FIG 1: eine erste Tabellenansicht mit einer bereits projektierten Meldung,
- FIG 2: eine Tabellenansicht mit einer neu projektierten Meldung innerhalb einer Tabelle nach FIG 1 sowie
- FIG 3: eine Tabellenansicht mit einer Mehrzahl neu projektierter Meldungen.

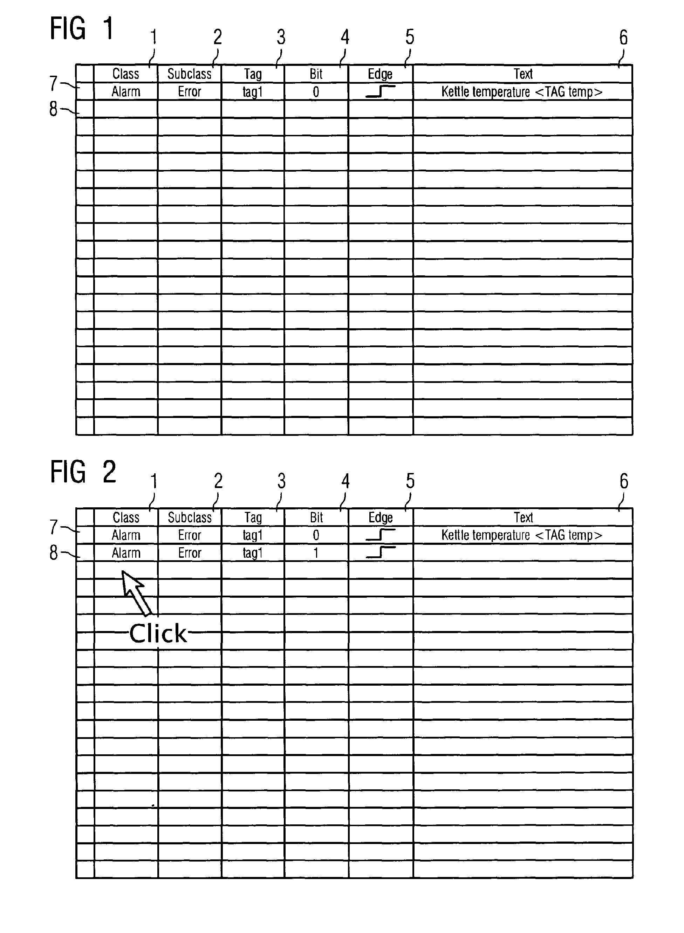

FIG 1 zeigt eine auf der Benutzeroberfläche einer Computer-Anwenderstation angezeigte Tabelle mit sechs Spalten 1 - 6 überschrieben mit "Class", "Subclass", "Tag", "Bit", "edge" sowie "Text" sowie einer ersten Zeile 7 mit den Dateninformationen "Alarm", "Error", "tag1", "0", "Symbol für ansteigende Flanke" und "Kettle temperature <TAG temp>".

In FIG 1 ist bereits eine Meldung projektiert, und zwar eine Alarmmeldung, welche auf einen Fehler hinweist. Diese Alarmmeldung ist mit einem bestimmten Datenwert der technischen Prozessanlage verbunden, der die Bezeichnung "Tag 1" trägt. Diese Alarmmeldung ist auf dem Bit-Platz "0" (Speicheradresse) eines Speichers der Computer-Anwenderstation abgelegt. Falls diese Bit-Information sich verändert, und zwar von "0" auf "1" (vgl. ansteigende Flanke in der Spalte "edge"), wird eine Meldung abgesetzt, und zwar eine Alarmmeldung "Kesseltemperatur X°C". Hierdurch wird z.B. angezeigt, dass eine Kesseltemperatur der Prozessanlage überhöht ist.

Zur Projektierung einer weiteren Meldung wird nun nach FIG 2 durch einen Eingabebefehl des Benutzers (z.B. einen Mausclick auf eine zweite Zeile 8) zunächst automatisch eine zweite Zeile erzeugt, in welche vorherige Dateninformationen kopiert werden (unveränderte Übernahme der Dateninformationen der Spalten 1 - 3 und 5, nämlich "Alarm", "Error", "tag1" und "Symbol für ansteigende Flanke"). In der Spalte "Bit" wird jedoch durch den einstellbaren und abstellbaren Fortschreibungsalgorithmus "Erhöhe bei einer neuen Meldung die Bit-Zahl um 1", die Bit-Zahl von "0" auf "1" erhöht". Damit wird das Speicher-Bit "1" mit einer neuen Meldung belegt, da das Bit "0" bereits für die erste Meldung benötigt wird.

Diese Meldung gemäß FIG 2, 2. Z. wird automatisch projektiert. Der Benutzer muss nur noch das letzte Feld in Spalte 6, nämlich den neuen Text (z.B. "Vorlauftemperatur") ausfüllen.

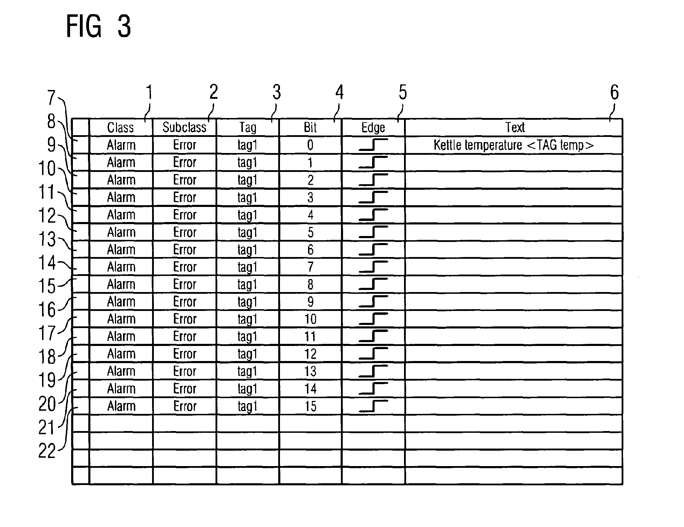

FIG 3 zeigt automatisch angelegte 15 neue projektierte Meldungen in den Zeilen 8 - 22 mit den automatisch durch einen Fortschreibungsalgorithmus geänderten Dateninformationen der Spalte 4, nämlich den Bit-Zahlen "1" bis "15". Die Dateninformationen der Spalten 1 - 3 und 5 wurden übernommen.

Die Textinformation in Spalte 6 kann nun wieder individuell vom Benutzer eingetragen werden. Die bisher erforderliche Arbeit des Benutzers die einzelnen Dateninformationen der Spalten 1, 2, 3 und 5 durch Kopieren und Einfügen aus der bereits vorhandenen Zeile 7 zu übernehmen sowie eine Fortschreibung der Dateninformation in Spalte 4 entfällt.

## Patentansprüche

1. Verfahren zur automatischen Projektierung einer neuen Meldung auf der Benutzeroberfläche einer Computer-Anwenderstation, wobei die neue Meldung zur Mitteilung einer Dateninformation einer technischen Prozessanlage dient,
**gekennzeichnet durch** folgende Verfahrensschritte:
- Anzeige einer bereits projektierten Meldung auf der Benutzeroberfläche, wobei die Meldung als Tabelle mit Spalten sowie mindestens einer Zeile angezeigt wird und die Felder der Tabelle Dateninformationen aufweisen,
- automatische Anzeige einer neuen Zeile der Tabelle nach einem Eingabesignal des Benutzers unter automatischer Belegung der Felder der neuen Zeile mit Dateninformationen, wobei mindestens eine Dateninformation identisch von der bisher projektierten Meldung übernommen und mindestens eine Dateninformation der bisher projektierten Meldung nach einem Fortschreibungsalgorithmus bearbeitet und geändert übernommen wird.

2. Verfahren nach Anspruch 1,
**dadurch gekennzeichnet, dass** die Anzahl der Spalten der Tabelle der neu projektierten Meldung der Anzahl der Spalten der bisher projektierten Meldung entspricht.

3. Verfahren nach Anspruch 1 oder 2,
**dadurch gekennzeichnet, dass** der Fortschreibungsalgorithmus darin besteht, dass eine Zahl als Dateninformation in einem Feld der Tabelle der bisher projektierten Meldung um einen einstellbaren Zahlenschritt verändert wird.

4. Verfahren nach Anspruch 3,
**dadurch gekennzeichnet, dass** eine Zahl um einen Zahlenwert herauf- oder herabgesetzt wird.

5. Verfahren nach einem der vorhergehenden Ansprüche,
**dadurch gekennzeichnet, dass** der Fortschreibungsalgorithmus einstellbar ist.

6. Verfahren nach einem der vorhergehenden Ansprüche,
**dadurch gekennzeichnet, dass** für mindestens ein Feld der Tabelle der bisher projektierten Meldung die Anwendung oder Nichtanwendung eines Fortschreibungsalgorithmus einstellbar ist.

7. Verfahren nach einem der vorhergehenden Ansprüche,
**dadurch gekennzeichnet, dass** für unterschiedliche Felder der Tabelle der bisher projektierten Meldung unterschiedliche Fortschreibungsalgorithmen einstellbar sind.

8. Verfahren nach einem der vorhergehenden Ansprüche,
**dadurch gekennzeichnet, dass** eine Dateninformation der bisher projektierten Meldung mit einer Ausprägung "A" und einer zweiten möglichen Ausprägung "B" durch Anwendung eines Fortschreibungsalgorithmus von der Ausprägung "A" auf die Ausprägung "B" als neue Dateninformation der neu projektierten Meldung bearbeitet und geändert wird.
